# EUROPÄISCHE PATENTANMELDUNG

(11) **EP 0 562 466 A1**
(43) Veröffentlichungstag der Anmeldung: **29.09.1993**
(21) Anmeldenummer: 93104483.8
(22) Anmeldetag: 18.03.1993
(51) Int. Cl.: C02F 3/30, C02F 3/34

(54) **Verfahren zur simultanen biologischen Stickstoffelimination und entsprechende Biomassen**

(30) Priorität: 18.03.1992 DE 4208698
(71) Anmelder: Pospischil, Branko, D-81735 München (DE)
(72) Erfinder: Pospischil, Branko, D-8000 München 83 (DE); Glancer, Margarete, Dr., SH-41000 Zagreb (HR); Sinisa, Ban, Dr., SH-41000 Zagreb (HR)
(74) Vertreter: von Füner, Alexander, Dr.

(57) **Zusammenfassung**

Verfahren zur simultanen Nitrifikation und Denitrifikation in einem Belebungsbecken durch kontinuierliche oder diskontinuierliche Zugabe von selektierten, extern gezüchteten nitrifizierenden und denitrifizierenden Mischkulturen bei einer Sauerstoffkonzentration von 0,1 bis 1,0 mg/l.

## Beschreibung

Die Erfindung betrifft ein Verfahren zur biologischen Stickstoffelimination durch simultane Nitrifikation und Denitrifikation in einem Belebungsbecken unter Anwendung von selektierten, nitrifizierenden und denitrifizierenden Mischkulturen, die getrennt gezüchtet und während der Reaktionen in den Bioreaktor dosiert werden, unter mikroaeroben Bedingungen.

Die aus der unter aeroben Bedingungen geführten Nitrifikation und der unter anoxischen Bedingungen (bei gelöstem O₂ ≦ 0,2 bis 0,3 mg/l) ablaufenden Denitrifikation als Verfahrenskombination für die biologische Stickstoffelimination benötigt in der Regel getrennte, unter unterschiedlichen Bedingungen betriebene Belebungsbecken und dementsprechend getrennte Schlammkreisläufe. Diese Ausführung ist wegen der Anzahl der Becken mit den dazugehörenden Klärern sowie Pumpen bzw. Instrumentierung ziemlich aufwendig. Die aus den Stufen vorgeschaltete Denitrifikation - Nitrifikaton - Nachklärer bestehende Verfahrensvariante mit einem Schlammkreislauf benötigt sehr hohe Rücklaufverhältnisse für eine befriedigende Eliminationsleistung, wobei eine weitgehende Stickstoffelimination nicht erreicht wird. Um die Vorrichtung für die Stickstoffelimination zu vereinfachen, d.h. möglichst in einem Reaktor durchzuführen, wurden bereits verschiedene Varianten vorgeschlagen. In dem sogenannten Karoussel-Verfahren wird der Reaktor durch an unterschiedlichen Stellen hintereinander installierte Belüftungsaggregate bzw. Umwälzvorrichtungen in aerobe (Nitrifikation) bzw. anoxische Zonen (Denitrifikation) unterteilt und das Abwasser durch geeignete Kreislaufführung vom NH₄-N befreit. Dieses Verfahren geht aber von einem minimalen meß- und regeltechnischen Aufwand aus; die Prozesse verlaufen daher unkontrolliert, vieles geschieht zufällig.

R. Kayser (Entsofgungspraxis, 1986, 3, S. 162-171) beschreibt die simultane Nitrifikation und Denitrifikation in einem Reaktor durch zeitlich aufeinanderfolgende Belüftungs(aerobe Bedingungen = Nitrifikation) und Umwälzphasen (anoxische Bedingungen = Denitrifikation) unter Verwendung einer Nitrifikanten und Denitrifikanten enthaltenden Mischkultur. Diese Verfahrensvariante ist meß- und regelungstechnisch aufwendig und erfordert wegen nicht sehr aktiver Biomasse lange Verveilzeiten und damit große Beckenvolumina.

L.A. Robertson und Mitarbeiter beschreiben in Appl. and environmental Microbiology, 54 (1988), 11, S. 2812 die simultane Nitrifikation, Denitrifikation durch den Stamm Thiosphera pantotropha unter aeroben Bedingungen.

Dieses Verfahren zeichnet sich zwar durch hohe Leistungsfähigkeit aus, reagiert aber auf qualitative und quantitative Schwankungen, wie z.B. Herkunft organischer Abwasser-inhaltsstoffe oder Salzgehalt, empfindlich.

In der DE 32 41 348 wird ein Belebtschlammverfahren zur Abwasserbehandlung beschrieben, das folgende Stufen umfaßt:
1) Rohes Abwasser wird in einen Belüftungstank, der Belebtschlamm enthält, eingeleitet.
2) Der Belüftungstank wird mit Luft versorgt, um im Tank aerobe und anaerobe Bereiche zu schaffen.
3) Von der aus dem Blüftungstank kommenden gemischten Flüssigkeit wird Schlamm abgetrennt. Zumindest ein Teil des abgetrennten Schlamms oder der vermischten Flüssigkeit wird in einer Konzentriervorrichtung konzentriert, wodurch man konzentrierten Schlamm und abgetrenntes Wasser erhält.
4) Der konzentrierte Schlamm wird in den Belüftungstank eingeleitet und die MLSS-Konzentration im Tank wird auf einen Wert von 7.000 bis 15.000 mg/Liter eingestellt. Dadurch werden im Belüftungstank aus dem Abwasser organische Substanzen und stickstoffhaltige Bestandteile entfernt.

Bei diesem Verfahren handelt es sich nicht um ein Verfahren zur simultanen Nitrifikation und Denitrifikation von Abwässern unter Verwendung von zwei bestimmten Kulturmischungen. Hier erfolgt die Nitrifikation und Denitrifikation nacheinander.

In Korrespondenz "Abwasser" 1/87, Seite 77 bis 85, werden allgemeine Angaben zur Nitrifikation und Denitrifikation gemacht. Spezifische Verfahrensparameter werden nicht gegeben. Von einer simultanen Nitrifikation und Dinitrifikation unter Zusatz von verschiedenen Kulturen ist nirgendwo die Rede.

In der Literaturstelle "Umweltschutz Entsorgungstechnik", Herausgeber: Prof. K. Sattler, Vogel-Buchverlag Würzburg, Seite 216 bis 218, wird nichts zur gleichzeitigen Nitrifikation und Denitrifikation gesagt.

Die Literaturstelle "gwf-wasser/abwasser" 124 (1983), H. 10, Seite 484 bis 487, befaßt sich mit der Steuerung der simultanen Denitrifikation über den Nitratgehalt des Belebtschlammes. Hierfür wird nur das Wort "simultan" verwendet, da es sich nicht um die gleichzeitige Nitrifikation und Denitrifikation handelt. Es geht hier um nachgeschaltete Belebungsbecken, wobei die Durchmischung über einen Mammutrotor gesteuert wird. Über den Zusatz von Bakterien wird überhaupt nichts gesagt.

Die Korrespondenz "Abwasser" 1/91, Seite 34 bis 39, beschäftigt sich mit dem Thema "Der Einsatz von nitrifizierenden Bakterien zur biologischen Stickstoffentfernung". Dieser Aufsatz ist allgemeiner Art und geht über den Stand der Technik nicht hinaus, der bereits oben gewürdigt worden ist. Es geht hier nicht um die simultane Nitrifikation und Denitrifikation durch Zusatz von zwei verschiedenen Kulturgemischen.

Schlußendlich ist noch der Aufsatz "Simultane Stickstoffelimination - Beitrag zur praktischen Anwendung auf Kläranlagen" in "Wasser und Boden", 5/1982, Seite 186 bis 193, zu erwähnen. Auch hier geht es nicht um den Zusatz von verschiedenartigen Bakterienkulturen.

Aufgabe der Erfindung war es, die bestehenden Verfahren so zu modifizieren, daß sie unempfindlicher werden und das behandelte Abwasser einen geringeren Gehalt an CSB und BSB₅ und somit Gesamtstickstoff aufweist.

Diese Aufgabe wurde wie aus den nachstehenden Ansprüchen ersichtlich gelöst.

Es wurde also überraschend gefunden, daß durch Zudosierung einer nitrifizierenden und denitrifizierenden Mischkultur, die extern in einem Bioreaktor gezüchtet worden ist, enthaltend Bakterien der Gattungen
1. Pseudomonas,
2. Acinetobacter,
3. Moraxella,
4. Corynebacterium und
5. Micrococcus,
der gewünschte Effekt erreicht werden kann.

Statt einer Mischkultur können beispielsweise bei NH₄-N-haltigen Industrieabwässern auch zwei oder mehrere Mischkulturen verwendet werden, die in der entsprechenden Anzahl von Bioreaktoren gezüchtet worden sind.

Unter Verwendung einer Mischkultur kann auch bei gelösten O₂-Konzentrationen von 0,1 bis 1,5 mg/l O₂ nitrifiziert und denitrifiziert werden.

Gegenstand der Erfindung ist somit ein Verfahren zur simultanen Nitrifikation und Denitrifikation von Stickstoffverbindungen in Abwässern, das dadurch gekennzeichnet ist, daß die Verfahrensschritte BSB₅-Oxidation, Nitrifikation und die anschließende Denitrifikation in einem Belebungsbecken ablaufen, wobei die nitrifizierenden und denitrifizierenden Mikroorganismen in einem oder mehreren externen, getrennten Bioreaktoren als eine oder mehrere selektierte Mischkulturen gezüchtet und kontinuierlich oder halbkontinuierlich in das Belebungsbecken dosiert werden, wo die Belebtschlammtrockensubstanz bei 2,0 bis 5,0 g/l liegt, wobei der Anteil der gezüchteten selektierten Mischkultur mindestens 0,1 bis 1,0 Gew.-% der gesamten Biomassentrockensubstanz beträgt, die NH₄-N- sowie NO₃-N-Schlammbelastungen zwischen 0,10 und 0,65 (g NH₄-N bzw. NO₃-N* g Schlamm⁻¹* Tag⁻¹) liegen und die Konzentration des gelösten Sauerstoffs 0,1 bis 1,5 mg/l beträgt.

Eine bevorzugte Ausführungsform besteht darin, daß als nitrifizierende und denitrifizierende Mischkultur Bakterien der Gattungen
1. Pseudomonas,
2. Acinetobacter,
3. Moraxella,
4. Corynebacterium und
5. Micrococcus
eingesetzt werden.

Eine weitere bevorzugte Ausführungsform besteht darin, daß man mit Belebungsbecken arbeitet, wo die Belebtschlammtrockensubstanz bei 0,4 bis 4,5 g/l liegt.

Eine weitere bevorzugte Ausführungsform besteht darin, daß man mit Belebungsbecken arbeitet, wo die Belebtschlammtrockensubstanz bei 3,0 bis 4,0 g/l liegt.

Eine weitere bevorzugte Ausführungsform besteht darin, daß man in einem Belebungsbecken arbeitet, wo die NH₄-N- sowie NO₃-N-Schlammbelastungen zwischen 0,12 und 0,6 (g NH₄-N bzw. NO₃-N * g Schlamm⁻¹ * Tag⁻¹ liegen.

Eine weitere bevorzugte Ausführungsform besteht darin, daß man in einem Belebungsbecken arbeitet, wo die NH₄-N- sowie NO₃-N-Schlammbelastungen zwischen 0,15 und 0,55 (g NH₄-N bzw. NO₃-N * g Schlamm⁻¹ * Tag⁻¹) liegen.

Eine weitere bevorzugte Ausführungsform besteht darin, daß man in einem Belebungsbecken arbeitet, wo die Konzentration des gelösten Sauerstoffs 0,15 bis 1,5 mg/l beträgt.

Eine weitere bevorzugte Ausführungsform besteht darin, daß man in einem Belebungsbecken arbeitet, wo die Konzentration des gelösten Sauerstoffs 0,2 bis 1,0 mg/l beträgt.

Die nitrifizierende und denitrifizierende Biomasse stellt vorzugsweise eine gezüchtete Mischkultur dar, bestehend aus den Gattungen
1. Pseudomonas,
2. Acinetobacter,
3. Moraxella,
4. Corynebacterium und
5. Micrococcus.

Verwendet man zwei Biomassen, so stellt die nitrifizierende vorzugsweise eine gezüchtete Mischkultur dar, bestehend aus den Gattungen
a) Pseudomonas, zu 30 bis 50 Gew.-%,
b) Flavobacterium, zu 10 bis 30 Gew.-% und
c) Bacillus zu 30 bis 50 Gew.-%,
die denitrifizierende Biomasse jedoch aus den Gattungen
a) Pseudomonas, zu 20 bis 40 Gew.-%,
b) Bacillus, zu 10 bis 30 Gew.-%,
c) Corynebacterium, zu 5 bis 20 Gew.-% und
d) Micrococcus, zu 30 bis 50 Gew.-%,
wobei die Summe der Bestandteile jeweils 100 Gew.-% ergibt.

Bevorzugt beträgt der Gehalt an Pseudomonas in der nitrifizierenden Biomasse 35 bis 45 Gew.-% bzw. 38 bis 42 Gew.-%.

Bevorzugt beträgt der Gehalt an Flavobacterium in der nitrifizierenden Biomasse 15 bis 25 Gew.-% bzw. 18 bis 23 Gew.-%.

Bevorzugt beträgt der Gehalt an Bacillus in der nitrifizierenden Biomasse 35 bis 45 Gew.-% bzw. 38 bis 42 Gew.-%.

Bevorzugt beträgt der Gehalt an Pseudomonas in der dentirifizierenden Biomasse 25 bis 35 Gew.-% bzw. 28 bis 32 Gew.-%.

Beovrzugt beträgt der Gehalt an Bacillus in der dentrifizierenden Biomasse 15 bis 25 Gew.-% bzw. 18 bis 22 Gew.-%.

Bevorzugt beträgt der Gehalt an Corynebacterium in der dentrifizierenden Biomasse 7 bis 15 Gew.-% bzw. 8 bis 12 Gew.-%.

Bevorzugt beträgt der Gehalt an Micrococcus in der denitrifizierenden Biomasse 35 bis 45 Gew.-% bzw. 38 bis 42 Gew.-%.

Als besonders vorteilhaft für den nitrifizierenden Schlamm erweist sich die Anwesenheit in der Mischkultur von auf die gesamte Biomassentrockensubstanz bezogen 5 bis 10 Gew.-% der Hefe Trichosporon, die sich einerseits wegen deren hohen Gehalt des Enzyms Peroxidase hervorragend für den Bioabbau substituierter aromatischer organischer Verbindungen eignet, andererseits jedoch mit Hilfe ihrer Mycelien für einen besseren Zusammenhalt der kleineren bakteriellen Zellen sorgt, was zu einer kompakteren, besser sedimentierbaren Schlammflocke führt.

Entscheidend für das Verfahren ist, daß der Anteil der selektierten Mischkultur mindestens 0,1 bis 1,0 Gew.-% der gesamten Biomassentrockensubstanz beträgt.

Das Substrat für die Anzucht der nitrifizierenden und denitrifizierenden Mischkultur erfolgt in mehreren Stufen, zunächst bis zu einer Menge von 300 bis 500 l im Laboratoriumsmaßstab auf einer synthetischen Salzlösung als Substrat, beinhaltend 200 bis 500 mg/l CH₃COONa, KH₂PO₄, MgCO₃, MgSO₄ (NH₄)₂SO₄, NaCl sowie CaCO₃. Nach Inokulieren mit 0,4 bis 0,5 g/l Mischkultur, Einstellen der Temperatur bei 15 bis 22°C und des pH-Wertes von 7,5 bis 8,0 erfolgt die aerobe diskontinuierliche Anzucht bei gelösten Sauerstoffkonzentrationen von 2,0 bis 3,0 mg O₂/l.

Die Anzucht der nitrifizierenden und denitrifizierenden Mischkultur an der Kläranlage selbst erfolgt vor Ort in einem oder mehreren Bioreaktoren, deren Volumen 1 bis 4 % des Belebungsbeckenvolumens beträgt. Das Substrat für die nitrifizierende und denitrifizierende Mischkultur ist das etwa 2 bis 5 g/l Belebtschlamm enthaltende Rohabwasser, der Zulauf des Belebungsbeckens, dessen C:N:P-Verhältnis bei Bedarf auf das übliche eingestellt wird. Nach Animpfen mit dem vorbereiteten Inokulum wird die Mischkultur bei 9 bis 20°C, pH 7,2 bis 8,0, bei einer gelösten Sauerstoffkonzentration von 2,0 bis 3,0 mg O₂/l gezüchtet, wobei die Flocken der Mischkultur in die Belebtschlammflocken "eingelagert" werden.

Das Substrat für die nitrifizierende Mischkultur beinhaltet erhöhte Konzentration an Ammoniumstickstoff oder Ammoniumstickstoff abspaltenden Verbindungen, wie z.B. Harnstoff usw., sowie organischen Kohlenstoff. Als besonders geeignet erweist sich Rohabwasser, das mit ammoniumstickstoffhaltigen Teilströmen, wie Belebtschlammautolysat oder sogenanntem Schlammpreßwasser angereichert wird.

Das Substrat für die denitrifizierende Mischkultur enthält neben den organischen Verbindungen die nötigen Konzentrationen an Nitratstickstoff, der sowohl in Form von Salpetersäure als auch aus Nitrate enthaltenden Teilströmen, wie z.B. aus der für die Anzucht der nitrifizierenden Mischkulturen dienenden, gebrauchten NO₃-haltigen Fermentationslauge bestehen kann.

Die Zudosierung der gezüchteten Mischkulturen kann kontinuierlich oder halbkontinuierlich aus den Bioreaktoren erfolgen. Die Menge der gezüchteten Mikroorganismensuspension beträgt je nach Biomassenkonzentration 0.2 bis 2,5 Vol.-% der Rohabwassermenge.

Die Stämme Pseudomonas und Bacillus in den beiden Biomassen müssen nicht identisch sein. Es ist ferner möglich, bei der zweiten Zudosierung nur Corynebacterium und Micrococcus zuzusetzen, wenn man bei der nitrifizierenden Biomasse in den oberen Bereichen arbeitet.

Es ist bevorzugt, mit einem Becken zu arbeiten, da ein wesentlicher Vorteil der Erfindung darin liegt, daß aufgrund der besonderen Verfahrensbedingungen eine Raumersparnis eintritt.

Der Zusatz der Biomassen muß bei Längsbecken, die bei kommunalen Kläranlagen üblich sind und in Fällen, wo mit zwei Mischkulturen gearbeitet wird, selbstverständlich in Fließrichtung erfolgen, d.h. die nitrifizierende Biomasse muß in der Nähe des Zuflusses des ungereinigten Abwassers zugegeben werden und die denitrifizierende in der zweiten Hälfte des Beckens, aber die optimale Zufuhrstelle hängt selbstverständlich von den jeweiligen Betriebsbedingungen ab und kann sehr einfach vom Durchschnittsfachmann bestimmt werden.

Als Rohabwasser, das in dem Belebungsbecken mit den nitrifizierenden und denitrifizierenden Mischkulturen behandelt wird, bzeichnet man bereits gepufferte, mechanisch vorgeklärte, aber auch teilweise biologisch vorbehandelte Abwässer, wie z.B. anaerob vorbehandelte Abwässer, oder beispielsweise in der A-Stufe einer nach dem A-B-Verfahren gebauten Anlage vorbehandeltes Abwasser.

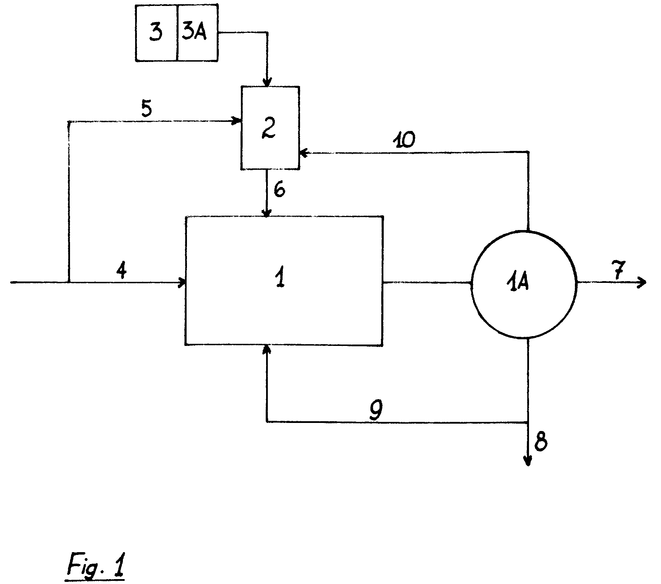

Die Funktionsweise des Verfahrens wird in den Figuren 1 bis 3 dargestellt.

Die Figuren 1 bis 3 stellen Schemazeichnungen der Anlage dar.

Fig. 1 beschreibt das Fließschema einer Anlage, in der die simultane Nitrifikation und Denitrifikation mit einer nitrifizierenden und denitrifizierenden Mischkultur erfolgt.

Danach wird in dem Bioreaktor 2 die im Kleinfermenter 3 bzw. 3A auf synthetischem Medium gezüchtete, aus den fünf Bakteriengattungen bestehende nitrifizierende und denitrifizierende Mischkultur vorgelegt und über die Leitung 5 mit Rohabwasser, über die Leitung 10 jedoch mit Belebtschlamm aus dem Nachklärer 1A beschickt. Nach Anzucht im Bioreaktor 2 wird die neue angereicherte Mischkultur über die Leitung 6 in das Belebungsbecken 1 gefördert.

Die Zufuhr des zu behandelnden BSB₅-, NH₄-N- sowie organischen N enthaltenden Abwassers in das Belebungsbecken 1 erfolgt über die Zulaufleitung 4. Aus dem Becken wird das behandelte, den Belebtschlamm enthaltende Abwasser in die Biomassenabtrennstufe 1A gefördert, wo die Biomassensuspension in eine "geklärte" flüssige Phase aufgetrennt wird, die über Leitung 7 die Anlage verläßt, sowie in eine "eingedickte" an Belebtschlamm angereicherte Phase, die über die Rücklaufleitung 9 in das Belebungsbecken 1 zurückgeführt oder als Überschußschlamm über die Leitung 8 aus der Anlage entfernt wird.

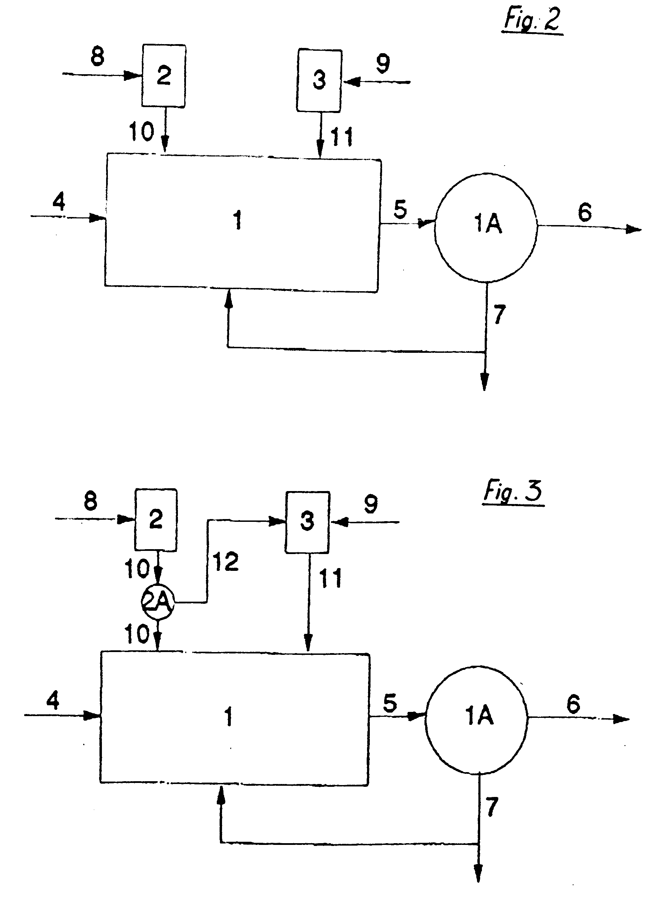

Gemäß Fig. 2 wird in dem Bioreaktor 2 die im Laboratorium zusammengestellte nitrifizierende Mischkultur vorgelegt und über den Zulauf 8 mit dem NH₄-N-haltigen Nährsubstrat beschickt, wobei die nitrifizierende Mischkultur gezüchtet und über die Leitung 10 in das Belebungsbecken 1 gefördert wird. In dem Bioreaktor 3 wird die im Laboratorium zusammengestellte denitrifizierende Mischkultur vorgelegt und über den Zulauf 9 mit dem NO₃-N-haltigen Nährsubstrat beschickt, wobei die denitrifizierende Biomasse gezüchtet und über die Leitung 11 in das Belegungsbecken 1 gefördert wird. Die Zufuhr des zu behandelnden, BSB₅- und NH₄-N sowie organischen N enthaltenden Abwassers in das Belebungsbecken 1 erfolgt über die Zulaufleitung 4. In dem Belebungsbecken wird das Abwasser in Gegenwart von 0,8 bis 2,0 g/l nitrifizierender und denitrifizierender selektiver Mischkultur bei Sauerstoffkonzentrationen zwischen 0,3 und 0,9 mg/l simultan nitrifiziert und denitrifiziert. Aus dem Becken wird das behandelte Abwasser über die Leitungen 5 in die Biomassenabtrennstufe 1A gefördert, wo die Biomassensuspension in eine "geklärte" flüssige Phase aufgetrennt wird, die über Leitung 6 die Behandlungsanlage verläßt, sowie in eine "eingedickte" an Belebtschlamm angereicherte Phase, die über die Rücklaufleitung 7 in das Belebungsbecken 1 zurückgeführt wird oder als Überschußschlamm aus der Anlage entfernt wird.

In Fig. 3 wird eine geringfügig geänderte Verfahrensvariante dargestellt. Der Unterschied zum Verfahren nach Fig. 2 besteht darin, daß die im Bioreaktor 2 gezüchtete nitrifizierende Mischkultur in der Trennvorrichtung 2A von der flüssigen NO₃-N-haltigen flüssigen Phase abgetrennt und in das Belebungbecken 1 dosiert wird, die NO₃-N-haltige "Klarphase" jedoch über Leitung 12 in den Bioreaktor 3 gefördert wird, wo sie als Grundlage für die NO₃-N-haltige Nährsubstanz dient.

Als überraschend bei dem erfindungsgemäßen Verfahren hat sich die Tatsache erwiesen, daß man einen nitrifizierenden Belebtschlamm der obigen Zusammensetzung überhaupt bei so hohen Umsätzen nitrifizieren kann, da die allgemeine Lehre die Nitrifikation den Bakterien Nitrosomonas und Nitrobacter zuschreibt. Bei der simultanen Nitrifikation und Denitrifikation mit selektierten nitrifizierenden und denitrifizierenden Mischkulturen bei 0,3 bis 1,0 mg/l gelöstem Sauerstoff hat sich als weiterhin überraschend erwiesen, daß sowohl die nitrifizierenden Mikroorganismen in der Lage sind, bei für sie so niedrigen O₂-Konzentrationen zu nitrifizieren, die denitrifizierenden Mischkulturen jedoch bei für sie so hohen O₂-Konzentrationen zu denitrifizieren.

Das erfindungsgemäße Verfahren zeichnet sich durch mehrere Vorteile gegenüber dem bisher Praktizierten aus. Sie weist eine hohe Prozeßstabilität auf, benötigt keine komplizierte Meß- und Regelungstechnik, sowie kompliziert verschaltete Belebungsbecken mit belüfteten und anoxischen Zonen.

Der Prozeß läuft in einem Belebungsbecken ab, wobei die Milieubedingungen überall verlgeichsweise gleich sind, die Biomasse weist dabei hohe Bioaktivität sowie hohe Belastbarkeit und Leistungsfähigkeit, weiterhin kompakte Flockenstruktur mit guten Absetzeigenschaften auf.

Folgende Beispiele dienen zur Erläuterung der Erfindung, wobei das Vergleichsbeispiel den Stand der Technik darstellt, Beispiel 1 das erfindungsgemäße Verfahren mit der Zugabe einer aus 5 Bakteriengattungen bestehenden nitrifizierenden und denitrifizierenden Mischkultur beschreibt, Beispiel 2 das erfindungsgemäße Verfahren unter Anwendung von 2 Mischkulturen darstellt, Beispiel 3 jedoch das erfindungsgemäße Verfahren, gekennzeichnet durch die zusätzliche, vorteilhafte Anwendung der Hefen Trichosporon.

### Vergleichsbeispiel

In der A-Stufe einer AB-Anlage vorbehandeltes Kommunalabwasser, das mit 230 mg/l CSB, 100 mg/l BSB₅ und 32 mg/l Gesamtstickstoff (TKN = Total Kjedahl-Nitrogen) belastet ist, wird in einer Versuchskläranlage, bestehend aus einem 30 l fassenden belüfteten Belebungsteil und einem 15 l fassenden Nachklärer in Gegenwart von 4 g/l kommunalem Belebtschlamm bei einer hydraulischen Verweilzeit von 8 Stunden unter aeroben Bedingungen bei 2 mg/l gelöstem Sauerstoff behandelt. Das behandelte Abwasser enthält 86 mg/l CSB, 11 mg/l BSB₅ und 18 mg/l Gesamtstickstoff.

### Beispiel 1

Das im Vergleichsbeispiel beschriebene Abwasser wird in der ebenso dort beschriebenen Anlage bei 3 Stunden Verweilzeit behandelt, jedoch mit dem Unterschied, daß der Belebtschlamm mit etwa 0,2 % nitrifizierender und denitrifizierender Mischkultur angereichert ist, und in die Anlage alle 4 bis 8 Stunden 0,2 bis 0,5 g mit Mischkulturen angereicherte Biomasse zugegeben wird.

Die nitrifizierende und denitrifizierende Mischkultur beinhaltet folgende Bakteriengattungen:
Pseudomonas
Acinetobacter
Moraxella
Corynebacterium und
Micrococcus.

Die Konzentration des gelösten Sauerstoffs wird zwischen 1,0 und 1,5 mg/l, die Temperatur zwischen 9 und 15°C gehalten. Das behandelte Abwasser enthält 19 mg/l CSB, 9 mg/l BSB₅, 3 mg/l NO₃-N und 1 mg/l Kjeldahl-N.

### Beispiel 2

Das im Vergleichsbeispiel beschriebene Abwasser wird in der ebenso dort beschriebenen Anlage bei gleicher Verweilzeit behandelt, jedoch mit dem Unterschied, daß in der Anlage alle 4 Stunden je eine bestimmte Menge an nitrifizierenden und denitrifizierenden Mischkulturen in einer Menge von je 0,2 bis 0,5 g Biomasse pro Liter Nutzvolumen im Tag zugegeben wird, so daß der Gehalt an Biomasse im Belebungsteil 1 bis 2 g/l beträgt. Der Schlammindex der Biomasse beträgt 70 bis 80 ml/g. die nitrifizierende Biomasse beinhaltet folgende Gattungen:

| | |
|---|---|
| Psudomonas | 40 Gew.-% |
| Flavobacterium | 20 Gew.-% |
| Bacillus | 40 Gew.-%. |

Die denitrifizierende Biomasse beinhaltet folgende Gattungen:

| | |
|---|---|
| Pseudomonas | 30 Gew.-% |
| Bacillus | 20 Gew.-% |
| Corynebacterium | 10 Gew.-% |
| Micrococcus | 40 Gew.-%. |

Die Konzentration des gelösten Sauerstoffs wird zwischen 0,3 und 0,8 mg/l gehalten. Das behandelte Abwasser enthält 60 mg/l CSB, 9 mg/l BSB₅ und 3 mg/l Gesamtstickstoff.

### Beispiel 3

Der im Beispiel 1 beschriebene Versuch wird mit dem Unterschied fortgeführt, daß unter Beinhaltung der Versuchsbedingungen zur nitrifizierenden Biomasse noch 0,05 bis 0,1 g pro Liter Belebungsvolumen und Tag die Hefe Trichosporon fermentans zugegeben wird. Das behandelte Abwasser dieser Anlage enthält nach 2 Tagen Adaptationszeit 50 mg/l CSB, 7 mg/l BSB₅ und 3 mg/l Gesamtstickstoff, während der Schlammindex der Biomasse 50 bis 60 ml/g beträgt.

## Patentansprüche

1. Verfahren zur simultanen Nitrifikation und Denitrifikation von Stickstoffverbindungen in Abwässern, dadurch **gekennzeichnet,** daß die Verfahrensschritte BSB₅-Oxidation, Nitrifikation und die anschließende Denitrifikation in einem Belebungsbecken ablaufen, wobei die nitrifizierenden und denitrifizierenden Mikroorganismen in einem oder mehreren externen, getrennten Bioreaktoren als eine oder mehrere selektierte Mischkulturen gezüchtet und kontinuierlich oder halbkontinuierlich in Fließrichtung gegebenenfalls nacheinander in das Belebungsbecken zudosiert werden, wo die Belebtschlammtrockensubstanz bei 2,0 bis 5,0 g/l liegt, die NH₄-N- sowie NO₃-N-Schlammbelastungen zwischen 0,10 und 0,65 (g NH₄-N bzw. NO₃-N * g Schlamm⁻¹ * Tag⁻¹) liegen und die Konzentration des gelösten Sauerstoffs 0,1 bis 1,5 mg/l beträgt, wobei der Anteil der selektierten Mischkultur mindestens 0,1 bis 1,0 Gew.-% der gesamten Belebtschlammtrockensubstand (im Belebungsbecken und Nachklärer) beträgt.

2. Verfahren nach Anspruch 1, dadurch **gekennzeichnet,** daß als Mischkultur Bakterien der Gattungen
1. Pseudomonas,
2. Acinetobacter,
3. Moraxella,
4. Corynebacterium und
5. Micrococcus
eingesetzt werden.

3. Verfahren nach Anspruch 1 oder 2, dadurch **gekennzeichnet,** daß man die Reinigung in einem einzigen Belebungsbecken ablaufen läßt, wo die Belebtschlammtrokkensubstanz bei 0,4 bis 4,5 g/l liegt.

4. Verfahren nach Anspruch 3, dadurch **gekennzeichnet,** daß man mit Belebungsbecken arbeitet, wo die Belebtschlammtrockensubstanz bei 3,0 bis 4,0 g/l liegt.

5. Verfahren nach einem der vorangegangenen Ansprüche, dadurch **gekennzeichnet,** daß man in einem Belebungsbecken arbeitet, wo die NH₄-N- sowie NO₃-N-Schlammbelastungen zwischen 0,12 und 0,6 (g NH₄-N bzw. NO₃-N * g Schlamm⁻¹ * Tag⁻¹) liegen.

6. Verfahren nach Anspruch 5, dadurch **gekennzeichnet,** daß man in einem Belebungsbecken arbeitet, wo die NH₄-N- sowie NO₃-N-Schlammmbelastungen zwischen 0,15 und 0,55 (g NH₄-N bzw. NO₃-N * g Schlamm⁻¹ * Tag⁻¹) liegen.

7. Verfahren nach einem der vorhergehenden Ansprüche, dadurch **gekennzeichnet,** daß man in einem Belebungsbecken arbeitet, wo die Konzentration des gelösten Sauerstoffs 0,15 bis 1,5 mg/l beträgt.

8. Verfahren nach Anspruch 7, dadurch **gekennzeichnet,** daß man in einem Belebungsbecken arbeitet, wo die Konzentration des gelösten Sauerstoffs 0,2 bis 1,0 mg/l beträgt.

9. Verfahren nach einem der vorangehenden Ansprüche, dadurch **gekennzeichnet,** daß im Falle der Verwendung von zwei Mischkulturen die nitrifizierende Biomasse eine gezüchtete Mischkultur darstellt, bestehend aus den Gattungen
a) Pseudomonas zu 30 bis 50 Gew.-%,
b) Flavobacterium zu 10 bis 30 Gew.-% und
c) Bacillus zu 30 bis 50 Gew.-%,
wobei die Summe der Bestandteile jeweils 100 Gew.-% ergibt.

10. Verfahren nach Anspruch 9, dadurch **gekennzeichnet,** daß der Gehalt an Pseudomonas in der nitrifizierenden Biomasse 35 bis 45 Gew.-% beträgt.

11. Verfahren nach Anspruch 10, dadurch **gekennzeichnet,** daß der Gehalt an Pseudomonas in der nitrifizierenden Biomasse 38 bis 42 Gew.-% beträgt.

12. Verfahren nach einem der Ansprüche 9 bis 11, dadurch **gekennzeichnet,** daß der Gehalt an Flavobacterium in der nitrifizierenden Biomasse 15 bis 25 Gew.-% beträgt.

13. Verfahren nach Ansprucdh 12, dadurch **gekennzeichnet,** daß der Gehalt an Flavobacterium in der nitrifizierenden Biomasse 18 bis 23 Gew.-% beträgt.

14. Verfahren nach einem der Ansprüche 9 bis 13, dadurch **gekennzeichnet,** daß der Gehalt an Bacillus in der nitrifizierenden Biomasse 35 bis 45 Gew.-% beträgt.

15. Verfahren nach Anspruch 14, dadurch **gekennzeichnet,** daß der Gehalt an Bacillus in der nitrifizierenden Biomasse 38 bis 42 Gew.-% beträgt.

16. Verfahren nach einem der vorangehenden Ansprüche, dadurch **gekennzeichnet,** daß im Falle von zwei Mischkulturen die denitrifizierende Biomasse aus den Gattungen
a) Pseudomonas zu 20 bis 40 Gew.-%,
b) Bacillus zu 10 bis 30 Gew.-%
c) Corynebakterium zu 5 bis 20 Gew.-% und
d) Micrococcus zu 30 bis 50 Gew.-%
besteht, wobei die Summe der Bestandteile jeweils 100 Gew.-% ergibt.

17. Verfahren nach Anspruch 16, dadurch **gekennzeichnet,** daß der Gehalt an Pseudomonas in der denitrifizierenden Biomasse 25 bis 35 Gew.-% beträgt.

18. Verfahren nach Anspruch 17, dadurch **gekennzeichnet,** daß der Gehalt an Pseudomonas in der denitrifizierenden Biomasse 28 bis 32 Gew.-% beträgt.

19. Verfahren nach einem der Ansprüche 16 bis 18, dadurch **gekennzeichnet,** daß der Gehalt an Bacillus in der denitrifizierenden Biomasse 15 bis 25 Gew.-% beträgt.

20. Verfahren nach Anspruch 19, dadurch **gekennzeichnet,** daß der Gehalt an Bacillus in der denitrifizierenden Biomasse 18 bis 22 Gew.-% beträgt.

21. Verfahren nach einem der Ansprüche 16 bis 20, dadurch **gekennzeichnet,** daß der Gehalt an Corynebacterium in der denitrifizierenden Biomasse 7 bis 15 Gew.-% beträgt.

22. Verfahren nach Anspruch 21, dadurch **gekennzeichnet,** daß der Gehalt an Corynebacterium in der denitrifizierenden Biomasse 8 bis 12 Gew.-% beträgt.

23. Verfahren nach einem der Ansprüche 16 bis 22, dadurch **gekennzeichnet,** daß der Gehalt an Micrococcus in der denitrifizierenden Biomasse 35 bis 45 Gew.-% beträgt.

24. Verfahren nach Anspruch 23, dadurch **gekennzeichnet,** daß der Gehalt an Micrococcus in der denitrifizierenden Biomasse 38 bis 42 Gew.-% beträgt.

25. Verfahren nach einem der vorangehenden Ansprüche, dadurch **gekennzeichnet,** daß die nitrifizierende und denitrifizierende Biomasse, auf die Gesamtmenge bezogen, zusätzlich noch 5 bis 0 Gew.-% der Hefengattung Trichosporon enthält.

26. Mischkultur zur Nitrifikation, bestehend aus den Gattungen
1. Pseudomonas,
2. Acinetobacter,
3. Moraxella,
4. Corynebacterium und
5. Micrococcus.

27. Mischkultur zur Nitrifikation, bestehend aus den Gattungen
a) Pseudomonas, zu 30 bis 50 Gew.-%,
b) Flavobacterium, zu 10 bis 30 Gew.-% und
c) Bacillus, zu 30 bis 50 Gew.-%,
wobei die Summe der Bestandteile jeweils 100 Gew.-% ergibt.

28. Mischkultur zur Denitrifikation, bestehend aus den Gattungen
a) Pseudomonas, zu 20 bis 40 Gew.-%,
b) Bacillus, zu 10 bis 30 Gew.-%,
c) Corynebacterium zu 5 bis 20 Gew.-% und
d) Micrococcus zu 30 bis 50 Gew.-%
besteht, wobei die Summe der Bestandteile jeweils 100 Gew.-% ergibt.
